# DEMANDE DE BREVET EUROPEEN

(11) **EP 0 546 592 A1**
(43) Date de publication de la demande: **16.06.1993**
(21) Numéro de dépôt: 92203228.9
(22) Date de dépôt: 23.10.1992
(51) Int. Cl.: B25J 9/02, B25J 9/00

(54) **Robot industriel à cadence élevée pour le déplacement d'un outil suivant les trois axes d'un repère cartésien orthogonal**

(30) Priorité: 25.10.1991 FR 9113228
(71) Demandeur: ARILON, F-61500 Sees (FR)
(72) Inventeur: Vivier, Yves Charles Bernard, F-14000 Caen (FR); Fayel, Claude, F-61500 Sees (FR)
(74) Mandataire: Durand, Yves Armand Louis

(57) **Abrégé**

La présente invention se rapporte à un robot industriel (2) à cadence élevée pour le déplacement d'un outil (12) suivant les trois axes d'un repère cartésien orthogonal.

Ce robot (2) qui est principalement constitué par une potence déformable (30) comportant trois poutres mutuellement orthogonales (32, 33, 34), dont deux au moins sont montées coulissantes relativement à un support (1) du robot (2), est caractérisé en ce que la poutre déplaçable à la verticale (34) au moins est guidée le long de rails en aluminium extrudé (50) qui lui sont fixés, et qui comportent chacun une portée durcie par un traitement électro- chimique de surface, ladite portée venant se loger à coulissement dans au moins un palier comportant une douille en polyester.

L'invention en question s'applique à la réalisation de robots grâce auxquels l'outil peut être déplacé à des vitesses et avec des accélérations importantes.

## Description

La présente invention se rapporte à un robot industriel pour le déplacement d'un outilsuivant les trois axes d'un repère cartésien orthogonal, à vitesse et avec des accélérations élevées.

On connait déjà des robots industriels pour le déplacement d'un outil par exemple de préhension, tel que pince ou ventouse. Fréquemment, ce type de robot comprend un support tel qu'un pied ou une console de machine, et une potence déformable, solidaire du support et à l'extrémité libre de laquelle l'outil est monté. La potence est constituée notamment par trois poutres respectivement orientées suivant la direction de l'un des axes exclusivement d'un repère cartésien orthogonal (c'est-à-dire d'un repère ayant un axe approximativement vertical et deux axes perpendiculaires définissant un plan sensiblement horizontal). Deux de ces poutres sont montées à coulissement suivant l'une au moins desdites directions. Pour chaque direction dont la verticale, on prévoit une paire de rails parallèles fixés à la poutre d'orientation correspondante, ainsi qu'un système d'entraînement, comme par exemple un vérin, apte à faire coulisser la poutre, de sorte que l'outil soit déplaçable suivant la direction de chaque axe du repère, indépendamment.

Toutefois, lorsque les déplacements de l'outil doivent être effectués à cadence élevée, autrement dit à vitesse et avec des accélérations importantes, des efforts considérables se développent dans les rails de guidage et dans les poutres notamment, de sorte que ces pièces - et principalement celles qui sont déplacées suivant la direction verticale - doivent être dimensionnées en conséquence, ce qui les rend trop lourdes et encombrantes.

Ainsi, dans le cas d'un robot de déchargement d'une presse à injecter pour la réalisation d'objets moulés, l'outil peut débattre suivant chaque direction, sur 700 à 3000 mm, avec une vitesse allant jusqu'à 3m/s et des accélérations atteignant 15m/s², pour que la production et le déchargement des objets moulés aient à peu près la même cadence.

En outre, les systèmes de guidage des robots connus ne garantissent pas une bonne précision du positionnement et des trajectoires de l'outil, principalement à cause de défauts de perpendicularité et/ou du vrillage des poutres sous les contraintes dues aux déplacements.

Aussi, la présente invention a pour but de proposer un robot industriel qui soit simple, léger et d'encombrement usuel, et qui permette des déplacements de l'outil rapides en comparaison avec ceux des robots équivalents de l'art antérieur, tout en garantissant une rigidité et une précision excellentes, particulièrement lors des déplacements verticaux de l'outil.

A cet effet, l'invention a pour objet un robot industriel pour le déplacement d'un outil, par exemple de préhension, du type comprenant un support tel que pied ou console, une potence déformable qui est solidaire du support et qui comporte trois poutres s'étendant respectivement suivant la direction de l'un exclusivement des axes d'un repère cartésien orthogonal, et pour chaque direction une paire de rails parallèles de guidage et fixés sur la poutre d'orientation correspondantes, ainsi qu'un système d'entraînement d'au moins deux des poutres montées à coulissement, dont l'une est déplaçable à la verticale, de sorte que l'outil qui est solidaire d'une poutre coulissante soit déplaçable suivant la direction de chaque axe du repère, indépendamment, caractérisé en ce que les rails de la poutre déplaçable à la verticale au moins sont en aluminium extrudé et possèdent chacun une portée cylindrique durcie par un traitement électrochimique de surface, cette portée venant se loger à coulissement dans au moins une douille en polyester solidaire d'un palier en aluminium, fixe relativement au déplacement du rail.

L'invention se caractérise encore en ce que les rails en aluminium ont une section transversale en forme de T renversé dont l'extrémité libre de la barre centrale constitue la portée cylindrique précitée.

De plus l'invention est caractérisée en ce que les rails de chaque paire sont fixés de part et d'autre de la poutre correspondante, dans un plan parallèle à l'axe longitudinal de cette dernière et au côté de cette poutre dont les dimensions sont les plus importantes en section transversale.

Selon une caractéristique de l'invention, la portée cylindrique est traitée par anodisation avec apport de matière sur une épaisseur d'à peu près 50 um, pour obtenir une dureté HRC de l'ordre de 50 à 60, ainsi qu'un coefficient de frottement inférieur à 0,2, la dureté étant de préférence égale à 55 et le coefficient de frottement à 0,1.

Selon une autre caractéristique, la douille précitée est usinée dans un polyester "thermoformé" (moulé à chaud) dont le coefficient de frottement est compris entre 0,05 et 0,12, les surface de contact entre la douille et la portée cylindrique étant glacées avec un enduit siliconé.

Suivant un mode de réalisation, l'invention est caractérisée en ce qu'au moins la poutre déplaçable suivant l'axe vertical du repère est constituée par un élément en aluminium profilé, qui définit seul ou conjointement avec un autre élément un profil creux généralement rectangulaire.

Plus précisément, la poutre précitée s'étend suivant un axe vertical et comprend un profilé creux d'aluminium de section rectangulaire monté sur un chariot mobile, avec sa face de dimension la plus large en regard de la poutre sur laquelle ladite poutre d'axe vertical est montée, cette poutre consistant en un profilé UPN et une plaque en aluminium soudés par leurs arêtes longitudinales respectives.

Le robot se caractérise de plus en ce que le système d'entraînement de la poutre verticale au moins comprend un mécanisme à poulies et courroie coopérant avec un moteur à courant continu, dans lequel une poulie de renvoi est munie d'un frein intégré de sorte que les déplacements verticaux de la poutre peuvent être interrompus en rendant cette poulie solidaire des paliers par rapport auxquels ladite poutre coulisse.

En outre, une poutre horizontale qui est montée sur le support est consitutée par un profilé UPN et un profilé à section carrée longitudinalement soudés à un fer plat, un rail à portée cylindrique étant fixé suivant un plan horizontal sur ledit profilé à section carrée, et un rail à section rectangulaire étant fixé au sommet du profilé UPN de façon que deux paires de galets solidaires d'un chariot de guidage d'une autre poutre roulent autour d'axes horizontaux respectivement sur l'une des faces longitudinales du rail à section rectangulaire.

Suivant l'exemple illustré, le robot se caractérise en ce qu'une première poutre de la potence est fixée en porte-à-faux horizontalement à une console de machine et s'étend à l'horizontale, perpendiculairement à l'axe longitudinal de la machine, une deuxième poutre horizontale s'étendant orthogonalement à la première et coulissant le long des rails de cette dernière par l'intermédiaire d'un chariot entraîné à l'aide d'un mécanisme à poulies et courroie coopérant avec un moteur à courant continu, la troisième poutre qui s'étend à la verticale étant montée sur un chariot mobile constitué par deux équerres fixement reliées à une platine, les équerres et la platine étant de préférence en alliage d'aluminium et étant reliées par les paliers suivant lesquels ladite poutre d'axe vertical coulisse le long des rails verticaux qui lui sont fixés.

Mais d'autres caractéristiques et avantages de l'invention ressortiront plus clairement de la description détaillée d'un mode de réalisation, donnée uniquement à titre d'exemple, qui suit et se réfère aux dessins annexés dans lesquels :
La figure 1 est une vue en élévation de côté d'une machine équipée d'un robot industriel conforme à un mode de réalisation de l'invention.
La figure 2 est une vue en élévation suivant la flèche Il de la figure 1.
La figure 3 est une vue en plan de la machine illustrée sur la figure 1 et 2.
La figure 4 est une vue représentant la section transversale d'un rail de guidage pour robot conforme à l'invention.
La figure 5 est une vue agrandie d'un détail, désigné en V du rail de la figure 4.
La figure 6 est une vue en plan du rail de guidage représenté sur les figures 4 et 5.
La figure 7 est une vue de face en élévation d'un palier de guidage du rail visible sur les figures 4 à 6.
La figure 8 est une vue en section transversale représentant l'une des extrémités d'une douille en polyester conforme à l'invention.
La figure 9 est une vue partiellement en coupe longitudinale de la douille de la figure 8.
La figure 10 est une vue partiellement en coupe suivant la ligne X-X de la figure 1, qui représente les guidages horizontaux et verticaux de la poutre verticale du robot conforme à l'invention.
La figure 11 est une vue partiellement en coupe suivant la ligne XI-XI de la figure 10, qui illustre le guidage horizontal et l'entraînement vertical de la poutre verticale du robot conforme à l'invention.
La figure 12 est une vue en coupe suivant la ligne XII-XII de la figure 11, qui représente une poulie à frein intégré du système d'entraînement vertical du robot.
La figure 13 est une vue en coupe suivant la ligne XIII-XIII de la figure 2, qui représente une poutre fixe de la potence du robot conforme à l'invention.
La figure 14 est une vue en coupe suivant la ligne XIV-XIV de la figure 13, qui représente un détail de l'un des systèmes d'entraînement du robot conforme à l'invention.
La figure 15 est une vue d'un détail de la poutre fixe de la potence suivant un plan parallèle à celui de la figure 13.
La figure 16 est une vue partiellement en coupe d'un chariot d'entraînement du robot conforme à l'invention.

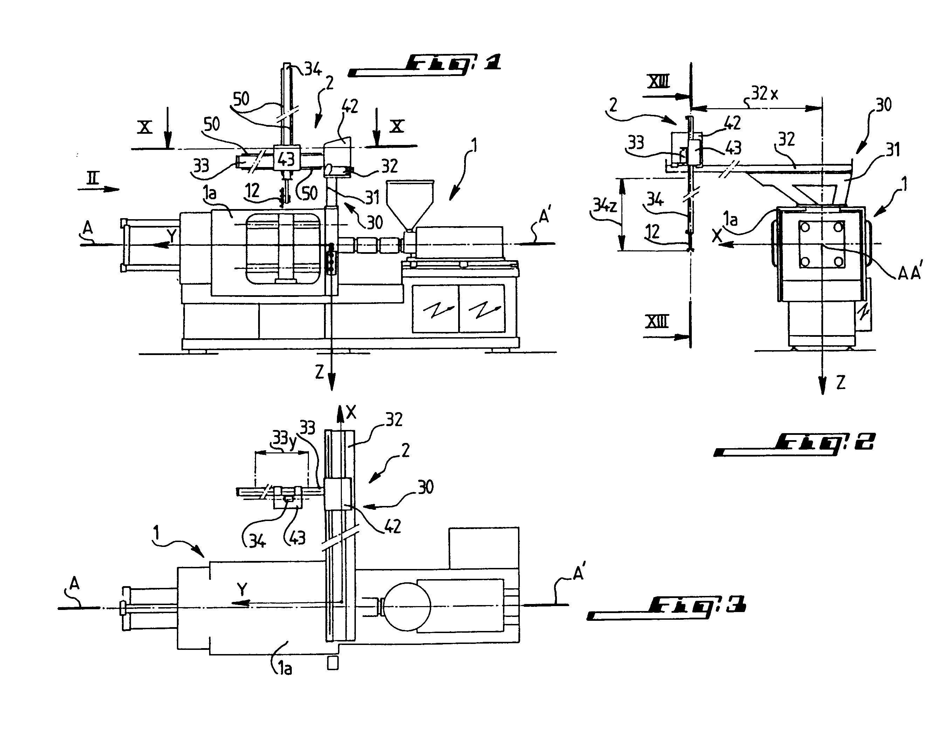

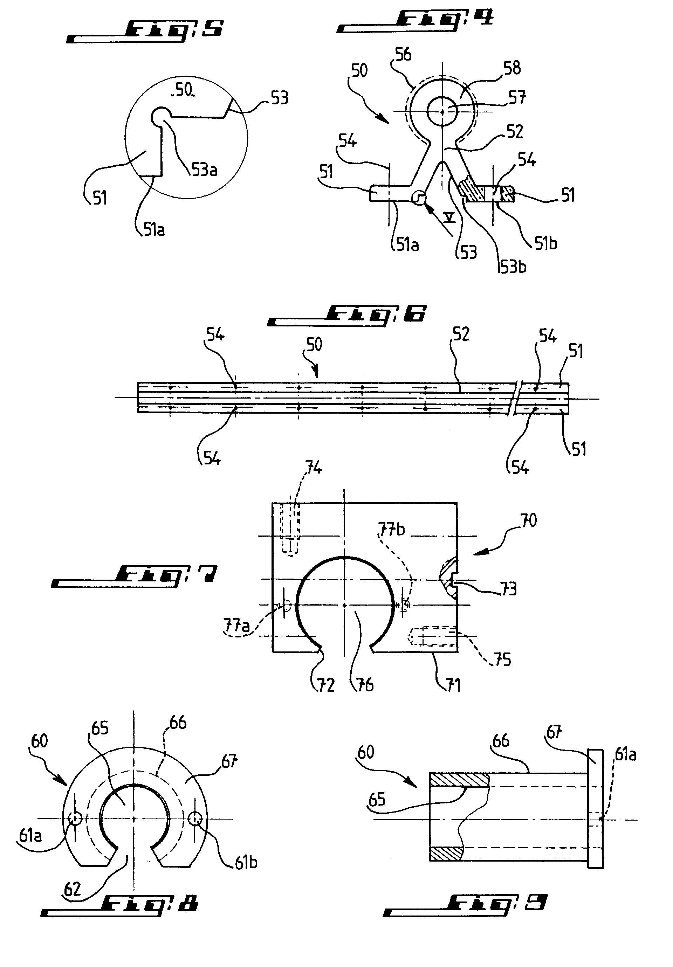

En se reportant tout d'abord aux figures 1 a 3, on voit une machine 1 qui fait office de support pour un robot industriel désigné généralement par la référence numérique 2. Sur ces figures, la machine 1 est représentée avec son axe longitudinal A-A' qui s'étend parallèlement à un axe Y d'un repère cartésien orthogonal défini par trois axes X, Y et Z. Dans ce repère, les axes X et Y sont orientés horizontalement et sont perpendiculaires l'un par rapport à l'autre, tandis que l'axe Z s'étend à la verticale.

Le robot 2 est monté sur une console 1 a de la machine 1 qui est, suivant l'exemple illustré, une presse à mouler pour la fabrication de pièces ou objets notamment en matière plastique. Le robot 2 sert à déplacer un outil 12 par rapport au repère XYZ. Plus précisément, l'outil 12 est un organe de préhension ou manutention tel que pièce, ventouse ou analogues, grâce auquel les objets produits par la machine 1 sont évacués à distance de cette dernière, par exemple pour être emmagasinés, emballés ou utilisés d'une autre façon. Pour ce faire, l'outil 12 du robot 2 est mobile ou déplaçable suivant chaque direction du repère XYZ décrit plus haut, de manière à pouvoir effectuer des va-et- vient entre la sortie de la machine 1 et un emplacement choisi où l'objet produit par la presse 1 doit être déposé. Evidemment, les déplacements de l'outil 12 par le robot 2 sont effectués sous le contrôle d'un programme exécuté par un ordinateur de commande (non représenté).

Comme visible sur les figures 1 à 3, le robot industriel 2 comprend une potence déformable 30. Par "déformable" on entend qu'une partie de la potence 30 sur laquelle est montée l'outil 12 est relativement déplaçable par rapport à une autre partie de cette potence qui est solidaire de la console 1 a de la presse 1, ce déplacement relatif revenant à faire changer la géométrie ou "forme" de la potence 30.

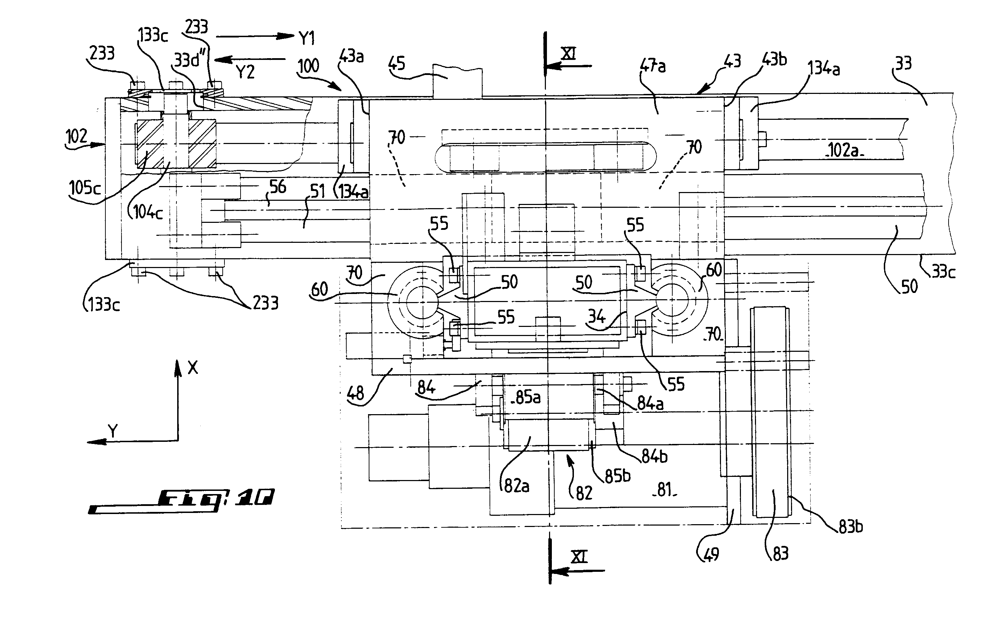

La potence 30 est notamment constituée par une base ou piètement 31 qui est solidaire de la console 1 a, et par trois poutres 32, 33 et 34. La première poutre 32 de la potence est fixée en porte-à-faux à l'extrémité supérieure du piètement 31 de façon à s'étendre à l'horizontale et parallèlement à la direction de l'axe X du repère XYZ, comme on le voit bien sur les figures 2 et 3. Deux rails parallèles sont fixés sur cette première poutre horizontale 32. Ces rails qui sont orientés suivant la direction longitudinale X de la poutre 32 permettent le guidage à coulissement d'un chariot 42. Ainsi, le chariot 42 qui est monté sur les rails de la poutre 32 est déplaçable suivant la direction X, sous l'effet d'un mécanisme ou système d'entraînement qui sera décrit ultérieurement.

La seconde poutre 33 est, comme visible sur les figures 1 et 3, fixée sur le chariot 42 et est orientée à l'horizontale, sensiblement à angle droit par rapport à la poutre 32, c'est-à-dire parallèlement à la direction de l'axe Y du repère XYZ et à l'axe longitudinal de la machine 1. A l'instant de la poutre 32, la deuxième poutre horizontale 33 comporte une paire de rails séparés qui s'étendent parallèlement à l'axe Y et sur lesquels un chariot 43 est monté à coulissement. Le chariot 43 est doté d'un système d'entraînement autonome grâce auquel ce chariot se déplace le long de la poutre 33.

On comprend déjà qu'à l'aide de la structure qui vient d'être décrite, le chariot 43 peut être déplacé en n'importe quel point d'une surface horizontale dont les côtés sont définis par les rails des poutres 32 et 33.

La troisième poutre 34 est montée généralement à la verticale sur le chariot mobile 43, autrement dit à peu près suivant la direction de l'axe Z du repère XYZ. La poutre 34 peut coulisser par rapport au chariot 43, le long d'une paire de rails qui sont fixés sur cette poutre parallèlement à sa direction longitudinale Z. Les déplacements de la poutre 34 suivant la direction Z sont obtenus grâce à un troisième système d'entraînement. De fait, puisque d'une part le chariot 43 est déplaçable en tout point sur la surface horizontale définie par les rails des poutres 32, 33 et que d'autre part l'outil 12 est monté (cf figures 1 et 2) à l'extrémité inférieure de la poutre 34 qui coulisse verticalement, cet outil 12 peut être déplacé suivant la direction de chaque axe X,Y ou Z, indépendamment.

Sur les figures 2 et 3, on a illustré par une cote désignée en 32x le débattement maximal possible de l'outil 12 suivant la direction X, par la référence 33y le plus grand déplacement possible de l'outil suivant l'axe Y et par la référence 34z la distance la plus longue suivant laquelle l'outil 12 peut coulisser parallèlement à l'axe vertical Z.

Conformément à la présente invention les rails fixés à la poutre déplaçable à la verticale 34 au moins sont en aluminium extrudé et possèdent chacun une portée cylindrique durcie par un traitement électrochimique de surface, cette portée étant apte à venir se loger à coulissement dans au moins une douille en polyester solidaire d'un palier fixe relativement au déplacement de ce rail.

En se reportant maintenant aux figures 4 à 9, la structure particulière du rail, de la douille et des paliers de guidage de la poutre 34 vont être décrits en détail.

On a représenté sur les figures 4 à 6 notamment un rail 50 qui est entièrement venu de matière par extrusion d'un aluminium. Evidemment, par "aluminium" on entend tout alliage à base d'aluminium tel que par exemple un alliage dont la désignation normalisée est 60 63 T5.

En section transversale (figure 4), le rail en alliage d'aluminium extrudé 50 a généralement la forme d'un T renversé, avec une barre transversale formant assise 51 et une partie ou barre centrale 52. L'assise 51 et la partie centrale 52 sont venues de matière pour former conjointement un ensemble monobloc.

L'assise 51 comprend sur sa face opposée à la partie centrale 52 une encoche centrale 53 en forme de V qui s'étend sur toute la longueur du rail 50. Cette encoche 53 en V définit deux surfaces latérales d'appui 51 a, 51 b avec lesquelles le rail 50 vient en appui contre son support. De plus, puisque l'encoche 53 s'étend sur toute la longueur du rail 50, celle-ci peut constituer une espèce de conduite pour le passage de câbles par exemple électriques entre le rail et son support - par exemple une poutre.

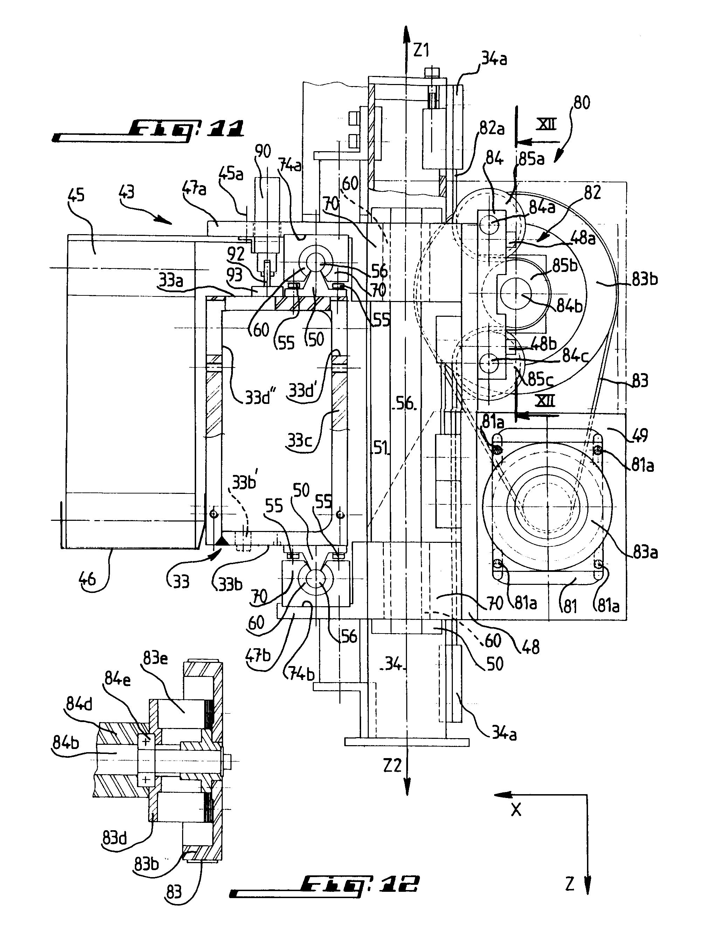

Comme visible sur la figure 5, la jonction entre chacune des surfaces latérales 51 a, 51 b et l'encoche centrale 53 comporte un dégagement 53a, 53b respectivement, grâce auquel les surfaces 51 a, 51 b peuvent correctement venir prendre appui contre le support du rail 50.

On voit sur la figure 6 que des perçages 54 sont formés dans l'assise 51, symétriquement de part et d'autre de la partie centrale 52. Des vis 55 (voir figures 10, 11 et 13) peuvent être montées dans les perçages 54 et venir se loger dans des trous correspondants (non illustrés) de la poutre pour y fixer le rail 50. L'espacement des perçages 54 suivant la direction longitudinale du rail 50 devra être déterminé en fonction des efforts appliqués à ce dernier, de sorte qu'il soit parfaitement fixé et en appui sur son support. Dans l'exemple illustré, cet espacement est de l'ordre de 100 mm.

L'extrémité libre de la partie centrale 52 qui est opposée à l'assise 51, à la forme d'un tube de section circulaire 58. L'extrémité libre 58 définit une portée de surface cylindrique 56 prévue pour le guidage à coulissement d'un palier qui sera décrit ultérieurement.

Cette portée cylindrique 56 représentée en pointillés sur la figure 4 est durcie sur une épaisseur de l'ordre de 50 um à l'aide d'un traitement électro-chimique de surface, afin d'éviter toute usure prématurée dûe aux frottements. Le traitement effectué sur la portée cylindrique 56 consiste suivant un mode de réalisation préféré, en une anodisation partielle dans un premier temps, suivie par un apport de matière durcissante et à faible coefficient de frottement lors de la fin de l'anodisation. Ce traitement, qui peut être le procédé breveté dit "tufram" par la Société MIFA, permet d'obtenir une dureté HRC de la portée qui est de l'ordre de 50 à 60 et, suivant un mode de réalisation préféré, sensiblement égal à 55. En outre, l'apport de matière tel que par exemple téflon @, céramiques ou analogues permet d'obtenir un coefficient inférieur à 0,2 et de préférence égal à 0,1.

Par ailleurs, on remarque aussi sur la figure 4 qu'un évidement ou orifice en forme de conduit 57 est formé dans l'extrémité 58 de la partie centrale 52 du rail. Cet orifice 57 présente une section transversale circulaire et s'étend sur toute la longueur du rail 50, coaxialement par rapport à la portée 56.

On comprend aisément qu'un tel orifice 57 qui débouche à chaque extrémité longitudinale du rail 50 peut faire office de conduit de passage pour des câble d'amenée d'air sous pression ou électriques par exemple pour l'alimentation et/ou la commande de l'outil 12.

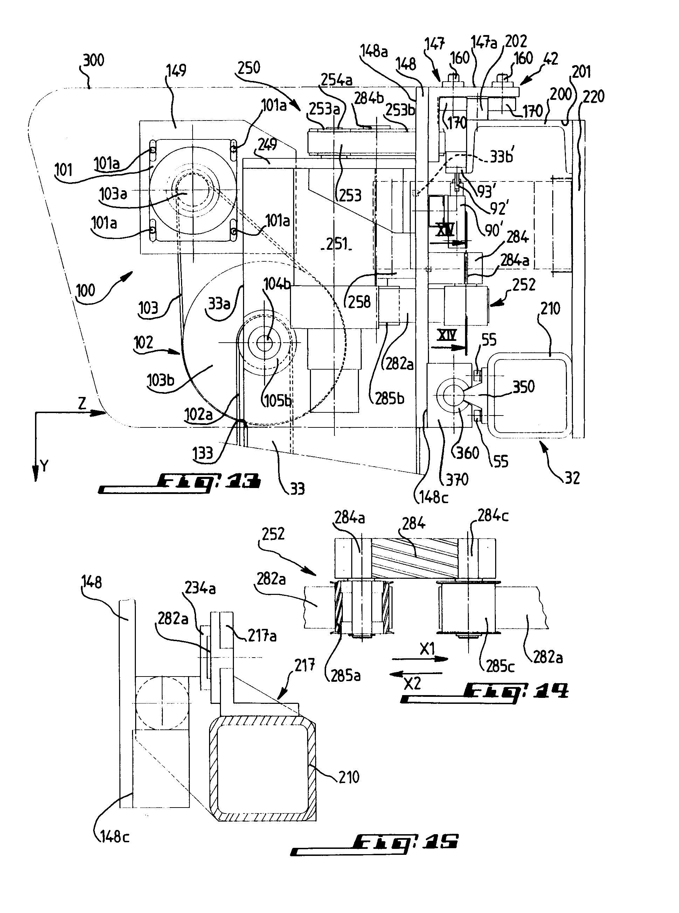

Comme on l'a dit brièvement plus haut, chaque rail 50 coopère avec des paliers par l'intermédiaire de douilles en polyester 60, telle que celle qui est représentée sur les figures 8 et 9. Autrement dit, la portée cylindrique 56 du rail 50 est logée et coulisse par rapport à une pluralité de douilles généralement cylindriques 60 qui sont respectivement fixées à un palier 70 - tel que celui que l'on voit sur la figure 7 - considéré comme étant fixe relativement au déplacement du rail 50.

Le palier 70 est constitué par une plaque généralement prismatique en alliage d'aluminium ayant une épaisseur de l'ordre de 40 à 50mm. Suivant un mode de réalisation préféré de l'invention, on utilisera un alliage d'aluminium répondant à la dénomination normalisée AGS. Un alésage approximativement cylindrique 76 est usiné dans le palier 70, à proximité de sa face 71 venant en regard du rail 50. L'alésage 76 débouche de la face 71 du palier 70 suivant deux de ses génératrices longitudinales. En d'autres termes, l'alésage 76 comporte une ouverture longitudinale 72 ayant une largeur correspondant sensiblement au rayon de l'alésage. Comme on l'expliquera en détail plus loin, l'ouverture longitudinale 72 permet à la partie centrale 52 du rail de faire saillie hors du palier 70 quand la portée cylindrique 56 est logée dans ce palier.

Le positionnement et la fixation du palier 70 sur son élément de support - dans l'exemple en question un chariot mobile - par rapport auquel les rails 50 coulissent, sont respectivement effectués par une gorge 73 sensiblement parallèle à l'axe (Z) de l'alésage 76, avec laquelle coopère une clavette de positionnement (non représentée) solidaire dudit élément de support (ou chariot), et à l'aide de vis (non représentées) qui viennent se loger et qui sont serrées dans des perçages filetés 74 et 75 notamment.

Toujours sur la figure 7, on remarque que deux perçages filetés 77a, 77b sont symétriquement formés de part et d'autre de l'alésage 76. Ces perçages filetés 77a, 77b qui sont usinés dans chaque palier 70 avec leurs axes parallèles à celui de l'alésage 76, permettent la fixation sur chaque palier 70 d'une douille en polyester 60 telle que celle qui va maintenant être décrite.

Comme illustré sur les figures 8 et 9 principalement, la douille 60 est constituée par une chemise généralement cylindrique 66 et par un épaulement 67 en saillie et venu de matière avec l'une des extrémités de la chemise 66. Cette chemise 66 possède un diamètre légèrement inférieur à celui de l'alésage 76 lui permettant de venir se loger avec précision dans ce dernier. Quand la chemise 66 de la douille 60 est complètement engagée dans l'alésage 76, la face de l'épaulement 67 qui est disposée en regard de la chemise 66 vient en appui contre la face du palier 70 ou les perçages 77a, 77b sont formés. On voit bien sur les figures 8 et 9 que les perçages 61 a, 61 b sont réalisés dans l'épaulement 67 de manière à venir en regard avec les perçages 77a, 77b du palier 70, afin que des vis (non représentées) puissent être montées dans les perçages filetés 77a, 77b pour fixer la douille 60 sur le palier 70.

Un alésage généralement cylindrique 65 est formé dans la douille 60 coaxialement à la chemise 66. Cet alésage 65 qui débouche à chaque extrémité de la douille 60 comporte, à l'instar de celui du palier 70, une ouverture longitudinale 62 dont la largeur correspond sensiblement au rayon de l'alésage 65. Cette ouverture 62 permet à la partie centrale 52 du rail 50 de faire saillie de la douille 60, lorsque la portée cylindrique 56 du rail est engagée à coulissement dans l'alésage 65.

Par conséquent, comme on l'expliquera mieux ultérieurement, la portée 56 du rail 50 vient se loger dans l'alésage 65 de la douille 60, qui elle-même vient se fixer sur le palier 70. Quand le rail 50, la douille 60 et le palier 70 sont ainsi assemblés, seule l'assise 51 et une portion inférieure de la partie centrale 52 qui est proche de ladite assise font saillie de la face 71 du palier, aux travers des ouvertures longitudinales 62 et 72 de la douille et du palier respectivement.

La douille 60 dont la forme vient d'être décrite est usinée dans un barreau "thermoformé" (moulé à chaud) en polyester à faible coefficient de frottement. Plus spécialement, la matière avec laquelle la douille 60 est formée sera choisie de sorte que son coefficient de frottement soit compris entre 0,05 et 0,12. Ceci peut être obtenu suivant un mode de réalisation préféré, en choisissant un polyester PETP désigné par l'appellation "Ertalyte" et vendu par la Société ERTA PLASTICS ENGENEE-RING, qui détient le brevet relatif à ce produit.

D'autre part, afin d'encore réduire les frottements entre la douille en polyester 60 et la portée 56 du rail 50, les surfaces de contact communes (56 et 65) de ces pièces seront de préférence "glacées" ou recouvertes avec un enduit siliconé lors de leur assemblage.

Maintenant, la structure particulière d'un robot industriel 2 qui recourt à des rails 50, douilles 60 et paliers 70 conformes à l'invention tels que ceux qui viennent d'être décrits plus haut, va être expliquée en se reportant aux figures 10 à 16 notamment.

Sur la figure 10 on voit notamment et partiellement en coupe suivant un plan parallèle au plan formé par les axes X et Y du repère XYZ, les poutres 33, 34 ainsi que le chariot mobile 43. La poutre 34 est constituée par un profilé en alliage d'aluminium de section creuse rectangulaire, et dont les dimensions sont déterminées en fonction des efforts à appliquer sur cette poutre. Suivant l'exemple illustré, la section du profilé à partir duquel la poutre déplaçable à la verticale 34 est formée, a sensiblement une longueur de 100 mm, une largeur de 50 mm et une épaisseur de 4 mm, de sorte qu'un espace vide important est disponible à l'intérieur de la poutre 34. De plus, comme on l'a dit plus haut, comme les câbles d'alimentation et/ou de commande de l'outil 12 peuvent passer par l'orifice 57 formé dans les rails 50, l'espace vide en question pourra aisément permettre le montage d'un système additionnel d'entraînement pneumatique tel qu'un vérin télescopique ou analogues, à l'extrémité duquel l'outil 12 pourra être monté de façon à obtenir, outre la course verticale de la poutre désignée en 34z sur la figure 2, une sur-course verticale par exemple de l'ordre de 250 mm.

On voit bien sur la figure 10 que des rails en aluminium extrudé 50 sont respectivement fixés à l'aide de vis 55 sur l'une des faces latérales de la poutre 34, de sorte que les côtés plus long en section du profilé s'étendent parallèlement à un plan formé par l'axe Y du repère XYZ et par la direction longitudinale (Z) du rail 50. La paire de rails 50 qui est fixée sur la poutre 34 s'étend sensiblement suivant la direction longitudinale (Z) de cette dernière et dans un plan parallèle à celui que décrit la poutre lorsqu'elle est déplacée avec le chariot 43 le long de l'axe Y de la poutre 33.

Avec une telle disposition de la poutre 34 où les rails 50 sont disposés de part et d'autre de la poutre, il est possible de réduire au maximum le porte-à-faux suivant la direction X de la poutre 34. De fait, les efforts tendant à faire vriller autour de son axe longitudinal (Y) la poutre 33, génèrent un moment d'autant plus limité que ce porte-à-faux est réduit. Ceci ressort très bien de la figure 10 ou l'on voit que la poutre 34 s'étend à une distance très réduite de la poutre 33 avec sa face la plus large en regard du chariot 43.

En se reportant aussi à la figure 11, on voit que chacun des rails 50 qui est fixé à la poutre 34 coopère avec deux ensembles douille 60 - palier 70 tels que décrits plus haut.

Les ensembles douille - palier situés le plus près de l'outil 12 (non représentés) sur les figures 10 et 11, sont dits ensembles inférieurs, et par opposition ceux qui sont les plus proches de l'autre extrémité de la poutre 34 sont dits supérieurs. Par conséquent, la paire de rails 50 de la poutre 34 coulissent à la verticale dans quatre paliers 70 à douilles dont deux (supérieurs) sont fixés à peu près symétriquement par rapport à la direction de l'axe Z sur le chariot 43, sensiblement au niveau de la face supérieure 33a de la poutre 33, tandis que les deux autres (dits inférieurs) sont fixés symétriquement sur le chariot 43 au niveau de la face inférieure 33b de la poutre 33.

Chacun des paliers 70 (cf. figure 7) est disposé de façon que sa gorge longitudinale (parallèle à l'axe Z) de positionnement coopère avec une clavette (non représentée) fixée à l'une des équerres supérieure 47a et inférieure 47b qui forment l'embase du chariot 43.

L'équerre 47a comprend une partie parallèle au plan YZ et une partie parallèle et en regard de la face supérieure 33a de la poutre 33. Similairement, l'équerre inférieure 47b comporte une partie sensiblement verticale et une partie parallèle et en regard de la face inférieure 33b de la poutre 33.

Sur les figures 10 et 11, on remarque une platine 48 du chariot 43 qui s'étend parallèlement au plan YZ. La platine 48 est généralement de forme rectangulaire et est fixée - par des vis non représentées - a chacun des quatre paliers 70 dans lesquels les rails 50 de la poutre 34 sont montés à coulissement. Cette platine 48 qui est donc reliée aux équerres 47a, 47b par les paliers 70 constitue avec ceux-ci le chariot mobile 43, et a principalement pour objet de former un support rigide pour un système d'entraînement 80 apte à faire coulisser verticalement la poutre 34 par rapport à la poutre 33.

Le système d'entraînement 80 comprend notamment un mécanisme à courroie et poulies 82 qui est relié et coopère d'une part avec la poutre 33 et d'autre par avec un moteur électrique 81.

Le moteur 81 est monté à l'aide de vis 81 a sur une patte d'ancrage 49 du chariot 43 qui est fixée par exemple par soudage sur la platine 48 et qui s'étend parallèlement au plan XZ du repère XYZ. Le moteur 81 dont l'axe s'étend parallèlement à l'axe Y est un moteur à courant continu. De préférence, les aimants du moteur 81 sont du type constitué par des "terres rares" tels que samarium- cobalt ou fer-néodine-bore.

Evidemment, le moteur 81 sera choisi de sorte que les paramètres de sa rotation puissent être commandés avec précision, par exemple à l'aide d'un ordinateur. Ainsi, un moteur sans induit alimenté en courant continu dont les performances sont suffisantes pour déplacer verticalement la poutre 34 quand l'outil 12 supporte sa charge maximale, constituera un choix parfaitement approprié. Dans le cas ou l'on souhaite obtenir des performances encore plus élevées, comme une vitesse de 3 m/s avec des accélérations atteigant 15 m/s², il sera avantageux de choisir un moteur de type autosynchrone. Toutefois, avec de telles performances, la charge sur la poutre 34 ne devra pas dépasser 5 kg (outil 12 compris) tandis qu'avec des déplacements moins rapides, il sera possible d'atteindre une charge utile de l'ordre de 20 kg.

Par ailleurs, le moteur 81 est relié au mécanisme 82 par l'intermédiaire d'une courroie sans fin 83 qui vient en prise d'une part avec une poulie de sortie 83a fixée à l'axe du moteur 81, et d'autre part avec une poulie de renvoi 83b avantageusement en alliage d'aluminium reliée fonctionnellement au mécanisme 82.

Le mécanisme 82 comprend principalement un support 84 fixé sur la platine 48 avec des vis 48a, 48b, et sur lequel trois axes parallèles à l'axe Y sont montés à rotation. Les trois axes parallèles qui sont désignés par les références 84a, 84b, 84c font office d'axes de rotation pour des poulies 85a, 85b, 85c respectivement. On voit bien sur la figure 11 que les poulies 85a, 85c sont disposées de part et d'autre de la poulie 85b, dans le plan XZ du repère XYZ.

Les poulies 85a, 85c sont montées folles sur leurs axes respectifs 84a, 84c et de façon que les tangentes communes de chacune de ces poulies 85a, 85c avec la poulie 85b soient approximativement parallèles l'une à l'autre. Quand à elle, la poulie centrale 85b est solidaire en rotation de l'axe 84b.

De préférence, le chariot 43 ainsi que le support et les poulies du mécanisme 82 seront réalisés en alliage d'aluminium ou tout autre matériau léger approprié.

Une courroie ouverte 82a dont chaque extrémité est fixée à l'une des extrémités longitudinales (supérieure et inférieure) de la poutre 34 vient en prise avec les poulies 85a, 85b, 85c. La courroie 82 s'étend généralement suivant l'axe Z, sauf au niveau du mécanisme 82 où elle s'engage sous la poulie folle 85a, avant de venir se plaquer contre la demi périphérie externe de la poulie motrice 85b et de suivre la poulie folle 85c jusqu'à être de nouveau parallèle à la poutre 34. Le montage de la courroie 82a sur la poutre 34 est effectué par des capots 34a fixés sur la poutre à l'aide de vis (non représentées) et aptes à pincer l'une des extrémités de la courroie 82a dans une position fixe par rapport à la poutre 34. On comprend en voyant la figure 11 que des encoches appropriées sont usinées dans la platine 48 pour permettre aux poulies 85a, 85c et donc à la courroie 82a, de faire saillie de la face opposée au mécanisme 82 de cette platine 48.

Comme visible sur la figure 12, la poulie centrale 85b est reliée à la poulie de renvoi 83 par l'intermédiaire notamment d'un dispositif de freinage 83e apte à bloquer la rotation de l'axe 84b par rapport au support 84. Sur cette figure 12, on voit bien que, similairement à la poulie 85b, la poulie de renvoi 83b est solidaire en rotation de l'axe 84b. Cet axe de rotation 84b est monté pivotant par rapport à une chemise en alliage d'aluminium 84d à l'aide de deux roulements tels que celui qui est désigné en 84e sur la figure 12.

La chemise 84d ainsi qu'un disque 83d sont fixés sur la platine 48 et comportent une gorge commune dans laquelle la bague extérieure du roulement 84e est logée. Le dispositif de freinage 83e qui peut être d'un type électromagnétique ou mécanique - par frottement - et qui est intégré dans un logement de la face arrière de la poulie de renvoie 83b permet de rendre solidaire le disque 83d et la poulie 83b. Ainsi, lorsque le dispositif de freinage 83e est activé par un moyen conventionnel approprié (non représenté), toute rotation des poulies 83b et 84b est rendue impossible, de sorte que le mécanisme d'entraînement 82 peut être bloqué pour une intervention quelconque, que le moteur 81 soit relié à la poulie 83b ou non.

A l'inverse, quand le dispositif de freinage 83e est désactivé et que le moteur 81 est mis sous tension, la poulie de renvoi 83b sera entraînée à rotation dans un sens relatif à la polarité du courant appliqué au moteur 81. Cette rotation de sens et d'amplitude déterminés par le programme de commande du robot 2, entraîne l'axe 84b et la poulie centrale 85b qui est en prise avec la courroie ouverte 82a de sorte que cette dernière est déplacée soit vers la poulie folle 85a, soit vers la poulie folle 85c. Alors, puisque chaque extrémité de la courroie 82a est fixée à l'une des extrémités de la poutre 34, celle-ci coulisse par rapport aux paliers 70 suivant l'axe Z (figure 11), vers le haut dans le premier et vers le bas dans le second cas. Ces deux déplacements verticaux de la poutre 34 (et donc de l'outil 12) sont respectivement illustrés par les flèches Z1 et Z2 sur la figure 11.

On voit aussi sur la figure 11 qu'une goulotte 45 de support pour une chaîne porte-câble (non représentée) est fixée sur l'équerre supérieure 47a du chariot 43, à l'aide de plusieurs vis dont seul l'axe 45a est visible. La goulotte 45 dans laquelle la chaîne solidaire du chariot 43 vient s'enrouler, s'étend généralement suivant le plan YZ, le long de la face verticale de la poutre 33 qui est opposée à la poutre 34. Un doigt élastiquement déformable 46 est fixé à l'extrémité de la goulotte 45 qui est la plus proche de la face 33b de la poutre 33. L'extrémité libre de ce doigt 46 forme un patin qui vient élastiquement en appui contre la face verticale de la poutre 33 le long de laquelle la goulotte 45 s'étend, afin d'équilibrer la charge que cette dernière applique sur la poutre 33.

Toujours en se reportant aux figures 10 et 11 notamment, on remarque qu'un rail 50 est fixé sur la face supérieure 33a de la poutre 33, et qu'un autre rail est fixé sur la face inférieure 33b. Ces deux rails 50 s'étendent parallèlement au plan YZ et suivant la direction de l'axe Y du repère XYZ.

Ces rails 50 qui sont similaires à ceux de la poutre 34 (à l'exception de leur longueur qui correspond ici à celle de la course désignée en 33y sur la figure 3), sont également fixés sur la poutre correspondant à leur direction longitudinale (Y), à l'aide de vis 55 qui sont montées dans des perçages 54 (figure 4). Cependant, on remarquera ici que des rails à portée cylindrique, mais en acier (par exemple XC55) étiré, trempé par induction et rectifié pourront aussi être utilisés pour le guidage du chariot 43 suivant l'axe Y. Dans ce cas les douilles seront remplacées par des douilles à billes conventionnelles.

Ici encore, afin de limiter le plus possible le porte-à-faux du chariot 43, les deux rails 50 sont montés l'un au droit de l'autre, à fleur du rebord longitudinal de la face supérieure 33a ou inférieure 33b respectivement, qui est le plus proche de la poutre 34. De plus, similairement à ce qui a été décrit plus haut, la portée 56 de chacun des rails de la paire de rails 50 fixée à la poutre 33 vient se loger à coulissement dans au moins une douille 60 elle-même respectivement fixée à un palier 70. De préférence, on prévoit deux ensembles douilles 60 - paliers 70 pour chaque rail 50, disposés sur le chariot correspondant avec un écartement le plus important possible suivant la direction longitudinale (Y) du rail sur lequel ils sont montés.

On comprend en voyant la figure 11 par exemple, que les paliers 70 coopérant avec les rails 50 de la poutre 33 sont fixés sur le chariot mobile 43 de façon à permettre de déplacer la poutre 34 suivant la direction (Y) de ces rails.

Plus précisément, on remarque que des surfaces 74a, 74b parallèles aux faces 33a, 33b sont respectivement usinées, par exemple par fraisage et/ou rectification, dans les équerres 47a, 47b du chariot 43. Ces surfaces 74a, 74b qui sont formées de manière à venir en regard des faces 33a, 33b respectivement, doivent être réalisées avec une grande précision essentiellement en ce qui concerne leur position relativement aux surfaces perpendiculaires sur lesquelles sont fixées les paliers 70 de guidage de la poutre 34.

Afin de limiter le plus possible les masses en mouvement dans le robot 2 tout en préservant une rigidité et une précision élevée des organes de guidage, la poutre 33 a une structure dite "mécano-soudée" et est réalisée de préférence en alliage d'aluminium. Suivant le mode de réalisation illustré sur la figure 11, la poutre 33 est constituée par un profilé UPN (dont la section transversale dans le plan XZ est en forme de U couché) et par une plaque soudée sur ledit profilé UPN de façon à obturer la partie concave de ce dernier. La plaque 33c s'étend parallèlement au plan YZ pour former le côté latéral de la poutre 33. Autrement dit, pour résister le mieux possible aux contraintes statiques (flexion) et dynamiques (vrillage), la poutre 33 a une section transversale et rectangulaire et creuse avec des dimensions supérieures suivant la direction de l'axe Z que suivant celle de l'axe X.

Sur la section de la poutre 33 des figures 10 et 11, on remarque un alésage 33d" formé en regard d'un alésage 33d' usiné dans le côté 33c à l'extrémité libre de la poutre 33 - c'est-à-dire l'extrémité opposée au chariot mobile 42. Les alésages 33d' 33d" s'étendent transversalement à la poutre 33, suivant la direction de l'axe X du repère XYZ.

Au vu de la figure 10, on comprend que les alésages 33d', 33d" permettent de monter dans la poutre 33 un axe transversal pour une poulie de renvoi d'une courroie motrice d'un système 100 d'entraînement du chariot 43 suivant la direction Y, qui sera décrit en détail ultérieurement.

La référence numérique 90 désigne sur la figure 11 un capteur de fin de course dont le corps est fixé suivant la direction Z sur la platine 47a. Le corps du capteur 90 comporte, à l'une de ses extrémités qui vient en regard de la face 33a de la poutre 33, une molette rotative 92. Lorsque le chariot 43 est à l'un des bouts de sa course 33y (figure 3), la molette 92 vient en appui contre une came 93 fixée sur la face 33a de la poutre 33, parallèlement aux rails 50. Ainsi, lorsque le chariot 43 est à l'extrémité des rails 50 de la poutre 33, la molette 92 s'enfonce dans le corps 90 en butant contre la came 93, et le capteur 90 qui est relié à l'ordinateur de contrôle (non représenté) du robot 2 délivre à celui-ci un signal indiquant que le déplacement du chariot 43 suivant la direction Y doit être interrompu. Ainsi le déplacement du chariot 43 suivant l'axe Y - et donc de l'outil 12 - est traité par l'ordinateur de sorte que ce déplacement est "asservi" ou contrôlé continuellement.

Des dispositifs similaires au capteur 90 seront évidemment prévus à chaque extrémité des déplacements suivant les directions Z (verticale) et X (poutre 32).

En outre, l'asservissement de la position de l'outil 12 suivant la direction de chacun des trois axes du repère X, Y, Z sera de préférence effectué à l'aide de dispositifs tels que des codeurs incrémentaux conventionnels (non illustrés) par exemple opto-électriques. L'asservissement pour chaque axe de la vitesse et des accélérations appliquées à l'outil 12 sera effectué de préférence à l'aide de dynamo-tachymétriques (non illustrées) prévues sur l'axe de chacun des moteurs. Il sera avantageux que pour chaque direction, la dynamo-tachy- métrique et les codeurs incrémentaux soient intégrés au moteur d'entraînement (81, 101, 251) de la direction correspondante.

En se reportant aux figures 10, 13 et 16 notamment, il ressort que le système d'entraînement 100 qui permet de déplacer le chariot 43 suivant la direction de l'axe Y est relativement similaire au système 82 qui a été décrit plus haut.

En effet, le système d'entraînement 100 comprend un mécanisme à poulies et courroie 102 qui coopère avec un moteur à courant continu 101. Ce moteur 101 similaire au moteur 81 et dont les caractéristiques sont choisies en fonction des déplacements suivant Y, est fixé sur la poutre 33. Plus précisément, le moteur 101 est monté à l'aide de vis 101 a sur une patte en alliage d'aluminium 149 fixée sur la face de la poutre 33 qui est opposée à la face 33c, parallèlement au plan YZ. La patte 149 est fixée, de préférence par soudage, à l'extrémité opposée aux alésages 33d' et 33d" de la poutre 33.

Une poulie de sortie 103a qui est solidaire en rotation de l'axe d'entraînement (non représenté) du moteur 101 entraîne en rotation une poulie de renvoi et de réduction 103b par l'intermédiaire d'une courroie sans fin 103.

La poulie de renvoi 103b est solidaire en rotation d'un arbre 104b qui est monté à pivot sur la poutre 33, à proximité de la face 33a et de la patte 149. L'arbre 104b est sensiblement parallèle à la direction de l'axe X et supporte également une poulie 105b de façon à l'entraîner en rotation.

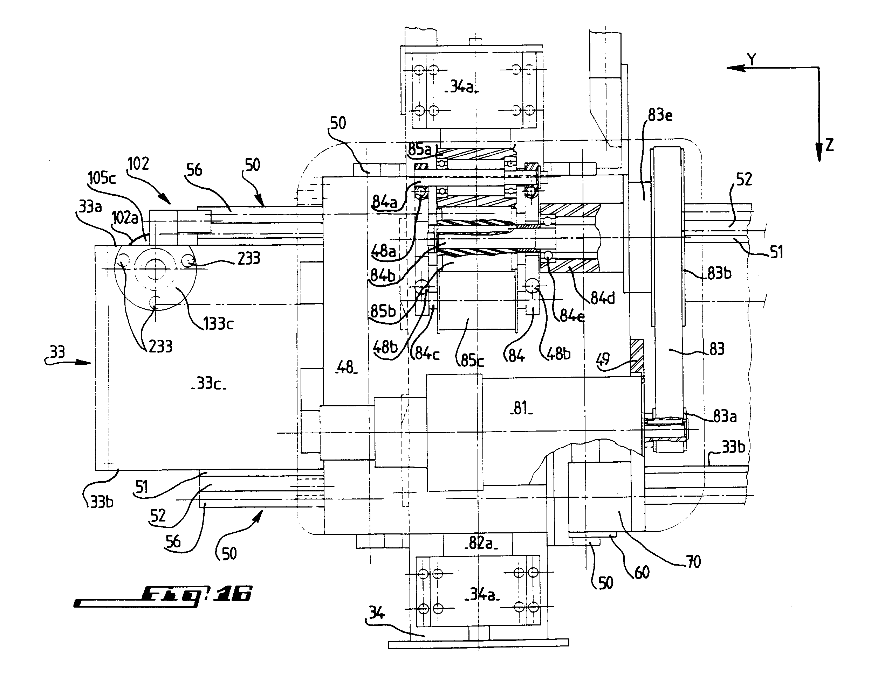

Sur la figure 13, on voit bien que les poulies 103b et 105b font saillie de la face supérieure 33a de la poutre 33, à travers une ouverture 133 prévue à cet effet. La courroie sans fin 103 en prise avec la poulie d'entraînement 103a ainsi qu'une courroie motrice 102a du mécanisme 102 passent dans l'ouverture 133. Cette courroie 102a est une courroie ouverte similaire à celle désignée en 82a, et est en prise avec la poulie 105b de façon que ses brins s'étendent depuis la périphérie de la poulie 105b, à peu près parallèlement à l'axe Y. Comme illustré, l'un des brins de la courroie motrice 102a est à l'extérieur de la poutre 33, tandis que l'autre est en dessous de la face 33a.

Sur les figures 10 et 16, on voit que la courroie 102a est généralement parallèle aux rails 50 qui sont fixés sur la poutre 33, et vient en prise avec une deuxième poulie 105c. La poulie 105c est montée folle sur un axe 104c sensiblement parallèle à l'arbre 104b. Cet axe de rotation 104b est monté de manière que ses extrémités fassent saillie des alésages 33d' 33d" respectivement, et viennent se loger dans des platines formant paliers 133c. Les platines 133c qui font office de paliers rapportés pour éviter l'usure des alésages 33d', 33d" sont en forme de disques tronqués, comme on le voit bien sur la figure 16, et sont fixées sur la poutre 33 à l'aide de vis 233 logées dans des perçages filetés correspondants qui sont usinés à la périphérie des alésages 33d', 33d".

Sur la figure 10, on remarque que les extrémités libres de la courroie 102a sont respectivement fixées sur l'un des côtés latéraux 43a, 43b de l'équerre supérieure 47a du chariot 43 à l'aide d'attaches vissées 134a, similaires à celles qui sont montées sur la poutre 34.

Ainsi, lorsque le moteur 101 est mis sous tension, la poulie 105b est entraînée dans un sens ou dans l'autre suivant la polarité du courant appliqué au moteur 101, ce qui déplace la courroie 102a et donc le chariot 43, suivant le sens Y1 ou le sens Y2.

Evidemment, ici aussi les poulies, attaches et autres éléments du mécanisme 102 seront si possible en alliage d'aluminium.

Sur les figures 13 à 15 notamment, on a représenté un mode de réalisation de la poutre 32 et du chariot 42 conformes à l'invention.

Sur la figure 13, on remarque que l'extrémité de la poutre 33 est solidaire d'une platine 148 qui constitue la partie maitresse du chariot 42. Comme la plupart des pièces mobiles du robot 2, cette platine 148 qui s'étend sensiblement parallèlement au plan XY, est de préférence en alliage d'aluminium. Pour garantir une précision très élevée du positionnement de la poutre 33 par rapport au chariot 42 (autrement dit assurer l'exactitude de la perpendicularité des poutres 32 et 33), la face dite supérieure 148a de la platine 148 qui est en regard du moteur 101 est usinée avec une très bonne finition de façon que la face inférieure 33b de la poutre 33 puisse y prendre un appui stable. En outre, on remarque sur les figures 11 et 13 que des pions et ou clavettes de positionnement 33b' sont montés d'une part dans la poutre 33 et d'autre part dans la platine 148. Il est ainsi possible d'obtenir une perpendicularité et un positionnement très précis de la poutre 33 par rapport à la poutre 32, ce qui était problématique dans les robots équivalents de l'art antérieur.

Sur la face 148b de la platine 148 du chariot 42, sont fixés d'une part deux paliers 370 de forme sensiblement similaire à ceux qui ont été décrits plus haut, et d'autre part une équerre 147. Toutefois, pour résister aux contraintes qui leur sont appliquées ces paliers 370 seront de préférence en acier trempé. Evidemment, l'espacement suivant la direction X entre les deux paliers 370 sera choisi pour offrir une rigidité et une précision optimales du guidage correspondant. L'équerre 147 qui est de préférence en alliage d'aluminium est fixée sur la face 148b de sorte que son arête coudée s'étend parallèlement à la direction X. La référence 148c désigne un usinage effectué dans la face 148b sur laquelle les paliers 370 sont en appui, de façon que l'axe longitudinal qu'une douille 360 qui est logée dans chacun desdits paliers 370 soit orienté avec le plus de précision possible suivant la direction X. Dans l'exemple illustré, la douille 360 est d'un type conventionnel à billes.

Similairement à l'équerre 47 décrite plus haut, l'équerre 147 comporte une partie parallèle à la platine correspondante - ici 148 - et une partie désignée en 147a, qui lui est perpendiculaire. La partie 147a de l'équerre 147 comporte quatre orifices débouchants, formés deux à deux parallèlement à l'axe X. Un doigt formant axe de rotation 160 est fixé sensiblement parallèlement à Y dans chacun des orifices débouchants de la partie 147a. Un galet cylindrique 170 est monté à rotation sur chaque axe 160, de manière à faire saillie de l'équerre 147, en regard de la poutre 32.

Suivant le mode de réalisation en question, la poutre 32 est constituée par un profilé UPN 200, relié à un autre profilé de section sensiblement carrée 210, par une plaque en fer plat 220 sensiblement parallèle à la platine 148.

Le profilé UPN 200 de la poutre 32 est fixé sur la plaque 220 de façon que sa partie concave soit en regard du profilé 210. De fait, une face dite externe 201 du profilé UPN s'étend parallèlement au plan XZ du repère XYZ et vient en regard des quatre galets cylindriques 170 qui sont montés à rotation sur les axes 160.

Un rail de section approximativement rectangulaire, et de préférence carrée 202 est fixé sur la paroi 201, au niveau de son rebord opposé à la plaque 220, c'est-à-dire le plus proche de la platine 148. Le rail 202 s'étend sensiblement suivant la direction de l'axe X du repère XYZ, et est fixé sur l'équerre 147 à l'aide par exemple de vis (non représentées). Deux faces latérales du rail 202 qui sont approximativement parallèles au plan XY viennent chacune en contact avec deux des galets cylindriques 170 décrits plus haut. Ainsi, chaque paire de galets 170 dont les axes 160 sont alignés parallèlement à l'axe horizontal Y, peuvent rouler contre l'une des deux faces du rail 202. Evidemment, on comprend bien que la section transversale du rail 202 ne sera pas forcément exactement carrée mais pourra avoir toute forme comportant deux faces latérales sensiblement parallèles et permettant le roulement de galets ou analogues. Le rail 202 qui a principalement pour fonction de s'opposer au couple de renversement du chariot 42, est constitué de préférence par un tronçon de profilé en acier XC 48, ayant subit un traitement de surface par induction, jusqu'à l'obtention d'une dureté de l'ordre de 57HRC, principalement au niveau des faces latérales sur lesquelles les gales décrits plus haut roulent.

En regard de la partie concave du profilé UPN 200, l'autre profilé 210, dont la section transversale est à peu près carrée, est également fixé par exemple par soudage, sur la plaque 220. Sur la figure 13, on voit bien que la surface usinée 148c est en face du profilé 210, et que ce dernier est disposé de façon que ses arêtes longitudinales s'étendent sensiblement suivant la direction de l'axe X du repère XYZ.

Un rail à portée cylindrique en acier 350 est fixé sur le profilé 210 à l'aide de vis 55, de manière que l'axe longitudinal de sa portée vienne se loger à coulissement suivant la direction X dans la douille à billes 360 de chacun des paliers 370 qui est monté sur la platine 148. Il va sans dire que le rail de section rectangulaire 202 ainsi que le rail 350 qui sont fixés sur la poutre 32 ont une longueur suivant la direction de X qui correspond au débattement du chariot 42 le long de la poutre 32, c'est-à-dire à la course désignée en 32x sur la figure 2.

On remarque sur la figure 13 un capteur 90' similaire à celui qui est illustré sur la figure 11. Ce capteur 90' est monté fixe sur la platine 148 du chariot 42, et coopère par l'intermédiaire de sa molette 92' avec une came 93' solidaire d'une extrémité du profile 200 de la poutre 32. Comme on l'a dit plus haut, ces éléments 90', 92' et 93' permettent de fournir à l'ordinateur de commande (non représenté) du robot 2 des signaux indiquant que le chariot 42 est à l'un des bouts de sa course 32x (figure 2) le long des rails 350 et 202 de la poutre 32. Avantageusement, le rail 350 sera en acier XC55. Sa mise en forme sera obtenue par étirement et rectification après une trempe par induction, de manière à obtenir une dureté HRC comprise entre 60 et 63.

En se reportant maintenant aux figures 13 à 15, le système 250 d'entraînement du chariot 42 suivant la direction de l'axe X du repère XYZ va être décrit. Tout comme les systèmes 80 et 100 correspondant aux axes Z et Y respectivement, le système 250 qui permet au chariot 42 - et donc à l'outil 12 - de se déplacer soit dans le sens X1, soit dans le sens X2 (figure 14), comprend un mécanisme à poulies et courroie 252, ainsi qu'un moteur 251 similaire à ceux désignés par les références 81 et 101. Evidemment, les caractéristiques du moteur 251 seront calculées et choisies en fonction des efforts à surmonter pour déplacer le chariot 42 suivant la direction de X, quelle que soit la charge statique ou dynamique appliquée à ce chariot.

Le moteur à courant continu 251 est fixé par l'intermédiaire d'une patte en alliage d'aluminium 249 soudée sur la platine 148 du chariot 42. Comme illustré, lorsque le moteur 251 est monté sur le chariot 42, son axe de sortie 254a s'étend parallèlement à l'axe Y du repère XYZ, et comporte à son extrémité la plus proche de l'équerre 147, une poulie de sortie 253a, qui est solidaire du rotor du moteur 251. La poulie 253a est reliée à une autre poulie de renvoi et de reduction 253b, à l'aide d'une courroie sans fin 253.

La poulie de renvoi 253b, qui est donc entraînée en rotation par le moteur 251 (via la poulie 253a et la courroie 253), est montée fixe à l'extrémité d'un arbre 284b dont l'axe s'étend parallèlement à l'axe Y. L'arbre 284b est monté en rotation sur un palier 258 de préférence en alliage d'aluminium et soudé sur la platine 148. Une poulie 285b est fixée à l'extrémité de l'arbre 284b qui est opposée à la poulie 253b. Cette poulie 285b du mécanisme 252 est en prise avec une courroie ouverte 282a similaire aux courroies 82a et 102a décrites précédemment. On comprend déjà que si le moteur 251 tourne dans un sens ou dans l'autre, il entraîne la poulie 285b qui à son tour déplace la courroie 282a linéairement sur la direction de X, dans un sens (Xi ou X₂) correspondant.

Sur la figure 15, on a illustré la façon dont la courroie d'entraînement 282a est rendue solidaire de la poutre 32. Une équerre 217 dont un pan 217a est sensiblement parallèle à la platine 148 est fixée par exemple par soudage sur le profilé de section carrée 210. Une patte de fixation 234 est fixée à l'aide de vis (non représentées) sur le pan 217a de l'équerre 217. Une des extrémités de la courroie 282a est logée et serrée dans un orifice approprié de la patte 234, de sorte que la poutre 32 soit solidaire de cette extrémité. Il va sans dire que chacune des deux extrémités libres de la courroie ouverte 282a est fixée similairement à ce qui vient d'être expliqué sur la poutre 32, à proximité de l'une des extrémités longitudinales du profile 210.

Par conséquent, puisque les extrémités de la courroie ouverte 282a sont fixement reliées au profilé 210 de la poutre 32, tout déplacement à l'aide du moteur 251 de la courroie 282a entraînera un déplacement correspondant du chariot mobile 42 par rapport à la poutre 32, suivant la direction de X.

On a illustré sur la figure 14 la manière dont la courroie 282a est guidée par deux galets 285a, 285c disposés du côté de la platine 148 qui est au regard avec le profilé 210. Ces galets 285a, 285c sont montés fous sur des axes 284a, 284c respectivement, eux-mêmes fixés sur un support 284 soudé sur la platine 148. Similairement aux poulies 85a, 85c du mécanisme 82, ces galets 285a, 285c guident la courroie 282a qui s'étend généralement suivant l'axe X, vers la poulie motrice 282. En d'autres termes, les galets 285a, 285c devient la courroie 282 pour qu'elle puisse venir en prise et être entraînée par la périphérie de la poulie motrice 285b.

La référence 300 sur la figure 13 désigne un capot réalisé dans tout matériau léger approprié tel qu'un alliage d'aluminium ou matière plastique, qui permet d'une part de protéger les mécanismes et systèmes d'entraînement du chariot 42 et d'autre part d'améliorer l'aspect esthétique général du robot 2. On comprend bien que ce capot ou couvercle 300 est fixé par tout moyen approprié sur la platine 148.

En se reportant aux figures 1 à 3, le fonctionnement du robot 2 va être maintenant brièvement expliqué. Lorsque l'outil 12 qui est fixé à l'extrémité inférieure de la poutre 34 doit être déplacé, par exemple depuis un point situé sur l'axe AA' de la machine 1 jusqu'à un point quelconque du repère XYZ, des commandes de mise en marche sous une tension et avec une polarité choisie sont appliquées soit simultanément, soit en série aux moteurs 81, 101, 251, de sorte que l'outil 12 est déplacé en fonction de la rotation de ces moteurs, d'une valeur déterminée sur chacune des trajectoires 34z, 33y et 32x.

Ainsi, on a décrit un robot industriel qui permet de déplacer un outil suivant les trois axes d'un repère cartésien orthogonal à une cadence élevée, grâce principalement au fait que la masse des pièces ou éléments en mouvement lors du déplacement de l'outil 12 a été fortement réduite en comparaison avec les robots équivalents de l'art antérieur. Cet allègement est obtenu grâce à l'utilisation de rails en aluminium extrudé 50 qui coulissent par rapport à des paliers 70 en aluminium, dans lesquels paliers, des douilles en polyester sont logées. Cette solution particulière à l'invention permet de garantir un guidage doux, précis et à fort rendement suivant les axes correspondants du repère.

Evidemment, l'invention n'est nullement limitée au mode de réalisation qui vient d'être décrit, mais comprend toutes les combinaisons et les équivalents des moyens techniques qui ont été décrits, si ceux-ci sont compris dans son champ. Ainsi, le robot industriel 2 peut être monté sur un pied fixé sur le sol au lieu d'être monté sur la machine 1.

## Revendications

1. Robot industriel pour le déplacement d'un outil (12) par exemple de préhension, du type comprenant un support tel que pied ou console, une potence déformable (30) qui est solidaire du support et qui comporte trois poutres (32, 33, 34) s'étendant respectivement suivant la direction de l'un exclusivement des axes (X,Y,Z) d'un repère cartésien orthogonal, et pour chaque direction une paire de rails parallèles de guidage et fixée sur la poutre d'orientation correspondante ainsi qu'un système d'entraînement d'au moins deux des poutres montées à coulissement, dont l'une est déplaçable à la verticale, de sorte que l'outil (12) qui est solidaire d'une poutre coulissante soit déplaçable suivant la direction de chaque axe (X,Y,Z) du repère, indépendamment, caractérisé en ce que les rails (50) de la poutre déplaçable à la verticale (34) au moins sont en aluminium extrudé et possèdent chacun une portée cylindrique (56) durcie par un traitement électrochimique de surface, cette portée (56) venant se loger à coulissement dans au moins une douille en polyester (60) soldaire d'un palier (70) en aluminium, fixe relativement au déplacement du rail.

2. Robot selon la revendication 1, caractérisé en ce que les rails en aluminium (50) ont une section transversale en forme de T renversé dont l'extrémité libre (58) de la barre centrale (52) constitue la portée cylindrique (56) précitée.

3. Robot selon la revendication 1 ou 2, caractérisé en ce que les rails (50) de chaque paire sont fixés de part et d'autre de la poutre (33; 34) correspondante, dans un plan parallèle à l'axe longitudinal (Y; Z) de cette dernière et au côté de cette poutre dont les dimensions sont les plus importantes en section transversale.

4. Robot selon l'une des revendications 1 à 3, caractérisé en ce que la portée cylindrique (56) est traitée par anodisation avec apport de matière sur une épaisseur d'à peu près 50 microns, pour obtenir une dureté HRC de l'ordre de 50 à 60, ainsi qu'un coefficient de frottement inférieur à 0,2, la dureté étant de préférence égale à 55 et le coefficient de frottement à 0,1.

5. Robot selon l'une des revendications 1 à 4, caractérisé en ce que la douille (60) précitée est usinée dans un polyester "thermoformé" dont le coefficient de frottement est compris entre 0,05 et 0,12, les surfaces de contact (56; 65) entre la douille (60) et la portée cylindrique (56) étant glacées avec un enduit siliconé.

6. Robot selon l'une des revendications 1 à 5, caractérisé en ce qu'au moins la poutre (34) déplaçable suivant l'axe vertical (Z) du repère est constituée par un élément en aluminium profilé, qui définit seul ou conjointement avec un autre élément, un profil creux généralement rectangulaire.

7. Robot selon l'une des revendications 1 à 6, caractérisé en ce que la poutre (34) précitée s'étend suivant un axe vertical (Z) et comprend un profilé creux d'aluminium de section rectangulaire monté sur un chariot mobile, avec sa face de dimension la plus large en regard de la poutre (33) sur laquelle ladite poutre d'axe vertical (34) est montée, cette poutre (33) consistant en un profilé UPN et une plaque (en aluminium) soudés par leurs arêtes longitudinales respectives.

8. Robot selon l'une des revendications 1 à 7, caractérisé en ce que le système d'entraînement (80) de la poutre verticale (34) au moins, comprend un mécanisme à poulie et courroie (82) coopérant avec un moteur à courant continu (81), dans lequel une poulie de renvoi (83b) est munie d'un frein intégré (83a) de sorte que les déplacements verticaux de la poutre (34) peuvent être interrompus en rendant cette poulie (83b) solidaire des paliers (70) par rapport auxquels ladite poutre (34) coulisse.

9. Robot selon l'une des revendications 1 à 8, caractérisé en ce qu'une poutre horizontale (32) qui est montée sur le support (1) est constituée par un profilé UPN (200) et un profilé à section carrée (210) longitudinalement soudés à un fer plat (220), un rail à portée cylindrique (350) étant fixé suivant un plan horizontal sur ledit profilé à section carrée (210), et un rail à section rectangulaire (202) étant fixé au sommet du profilé UPN (200), de façon que deux paires de galets (170) solidaires d'un chariot de guidage (42) d'une autre poutre (33) roulent autour d'axes horizontaux (160) respectivement sur l'une des faces longitudinales du rail à section rectangulaire (202).

10. Robot selon l'une des revendications 1 à 9, caractérisé en ce qu'une première poutre (32) de la potence (30) est fixée en porte-à-faux horizontalement à une console de machine (1) et s'étend à l'horizontale, perpendiculairement à l'axe longitudinal (A-A') de la machine (1), une deuxième poutre horizontale (33) s'étendant orthogonalement à la première (32) et coulissant le long des rails (350, 202) de cette dernière par l'intermédiaire d'un chariot (42) entraîné à l'aide d'un mécanisme à poulies et courroie (252) coopérant avec un moteur à courant continu (251), la troisième poutre qui s'étend à la verticale étant montée sur un chariot mobile (43) constitué par deux équerres fixement reliées à une platine (48), les équerres (47a; 47b) et la platine (48) étant de préférence en alliage d'aluminium et étant reliées par les paliers (70) suivant lesquels ladite poutre d'axe vertical (34) coulisse le long des rails verticaux (50) qui lui sont fixes.

11. Robot selon l'une des revendications 1 à 10, caractérisé en ce que la poutre déplaçable à la verticale (34) définit un espace vide intérieur disponible pour le montage d'un système additionnel d'entraînement pneumatique tel qu'un vérin télescopique ou analogue, à l'extrémité duquel l'outil (12) est monté de façon à obtenir, outre la course verticale de la poutre (34) le long de ses rails (50), une sur-course verticale, par exemple de l'ordre de 250 mm.
